(19) Europäisches Patentamt / European Patent Office / Office européen des brevets

(11) **EP 4 317 815 B1**

(12) **EUROPEAN PATENT SPECIFICATION**

(45) Date of publication and mention of the grant of the patent:
**22.04.2026 Bulletin 2026/17**

(21) Application number: **22775809.1**

(22) Date of filing: **24.03.2022**

(51) International Patent Classification (IPC):
***F24F 11/30*** *(2018.01)* ***G06Q 50/16*** *(2024.01)*
***F24F 11/63*** *(2018.01)* ***G06F 30/13*** *(2020.01)*
***G06F 30/20*** *(2020.01)* *F24F 110/10 (2018.01)*
*F24F 110/20 (2018.01)* *F24F 110/70 (2018.01)*
*G06F 119/08 (2020.01)*

(52) Cooperative Patent Classification (CPC):
**F24F 11/63; G06F 30/13; G06F 30/20;** F24F 11/46; F24F 2110/10; F24F 2110/20; F24F 2110/70; G05B 2219/2614; G06F 2119/08

(86) International application number:
**PCT/JP2022/014186**

(87) International publication number:
**WO 2022/203028 (29.09.2022 Gazette 2022/39)**

(54) **INFORMATION PROCESSING DEVICE AND PROGRAM**

INFORMATIONSVERARBEITUNGSVORRICHTUNG UND -PROGRAMM

DISPOSITIF ET PROGRAMME DE TRAITEMENT D’INFORMATIONS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.03.2021 JP 2021052075**

(43) Date of publication of application:
**07.02.2024 Bulletin 2024/06**

(73) Proprietors:
- **Daikin Industries, Ltd.**
  **Osaka-shi, Osaka 530-0001 (JP)**
- **The University of Tokyo**
  **Bunkyo-ku, Tokyo 113-8654 (JP)**

(72) Inventors:
- **SATO, Daisuke**
  **Osaka-shi, Osaka 530-0001 (JP)**
- **KANSHA, Yasuki**
  **Tokyo 113-8654 (JP)**

(74) Representative: **Hoffmann Eitle**
**Patent- und Rechtsanwälte PartmbB**
**Arabellastraße 30**
**81925 München (DE)**

(56) References cited:
**EP-A1- 3 340 163** **WO-A1-2020/075244**
**JP-A- 2001 344 294** **JP-A- 2005 301 487**
**JP-A- 2012 194 700** **JP-A- 2015 148 410**

- **FAN YUNQING ET AL: "Energy consumption analysis intended for real office space with energy recovery ventilator by integrating BES and CFD approaches", vol. 52, 1 June 2012 (2012-06-01), GB, pages 57 - 67, XP093177376, ISSN: 0360-1323, Retrieved from the Internet <URL:https://pdf.sciencedirectassets.com/271434/1-s2.0-S0360132312X00027/1-s2.0-S0360132311004240/main.pdf?X-Amz-Security-Token=IQoJb3JpZ2luX2VjEJ3//////////wEaCXVzLWVhc3QtMSJHMEUCIQD0IaEsW70x36hKu28DtNBCYfUNDBY6z77iJwkHcMBeyQIgSDJrWDKIAbcXnLoSEZSIb07T29q1IB+WpDHrT6YNWN8qswUIRhAFGgwwNTkwMDM1NDY4NjUiDKuPo> DOI: 10.1016/j.buildenv.2011.12.008**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 317 815 B1

## Description

### Technical Field

The present disclosure relates to an information processing device, and a program.

### Background Art

Document 1 describes an air conditioning heat source equipment optimum operation controller obtaining an optimum operation plan of a heat source equipment based on a heat load prediction value and an air conditioning/heat source plant model created by combining various kinds of physical models related to an air conditioning/heat source plant.

Document 2 describes analyzing heat transfer and air flowing in a building on the basis of knowledge of construction equipment design without requiring a work of replacement with a heat and ventilation circuit network model.

Document 3 describes an air conditioning operation analysis device including an air conditioning operation data acquirer that acquires air conditioning operation data of at least one air conditioner installed in a room, a room information acquirer hat acquires room information indicating a configuration of the room, an environmental information data acquirer that acquires environmental information data from at least one sensor arranged in the room, and an outputter that outputs heat load data that is calculated based on the acquired air conditioning operation data, the acquired room information, and the acquired environmental information data.

Document 4 describes energy consumption analysis intended for real office space with energy recovery ventilator by integrating BES and CFD approaches.

Document 5 describes an air conditioning control controlling a temperature of a specified place such that the temperature thereof is a desired temperature.

### Citation List

Document 1: Japanese Patent Laid-Open No. 2002-206785

Document 2: JP 2001 344294 A

Document 3: EP 3 340 1 63 A1

Document 4: Fan Yunqing ET AL: "Energy consumption analysis intended for real office space with energy recovery ventilator by integrating BES and CFD approaches", BUILDING AND ENVIRONMENT, vol. 52, pages 57-67, GB ISSN: 0360-1323

Document 5: JP 201 5 1 48410 A


### Summary of Invention

### Technical Problem

For example, in a method such as CFD (computational fluid dynamics), an air environment, etc. in a subject space is predicted by setting conditions such as a heat source, an air conditioner, and a space. However, this method requires a significant time to perform each calculation with different calculation conditions. In addition, it is not easy for a user to create a model according to the desired layout and placement of devices, even with a conventional method using physical models, for example.

An object of the present disclosure is to easily estimate an air environment of a subject space by using a model that predicts an environment where elements are placed in a desired manner.

### Solution to Problem

This object is accomplished by the subject-matter of the independent claims. The dependent claims concern particular embodiments.

According to the information processing device, the air environment in the subject space can be easily estimated using models that predict an environment with elements placed in a desired manner.

The element model may be a model of an element affecting the air environment of the space.

With this, the air environment in the subject space can be easily estimated using models of elements affecting an air environment of a space.

The air environment of the space may include at least one of a temperature, a humidity, an airflow, and a concentration of carbon dioxide in the space.

With this, at least one of a temperature, a humidity, an airflow, and a concentration of carbon dioxide in the subject space can be easily estimated using a model predicting at least one of a temperature, a humidity, an airflow, and a concentration of carbon dioxide with elements placed in a desired manner.

The element model may include an air conditioner model for predicting an effect of an air conditioner, which is provided to the space, on the air environment of the space.

With this, the air environment in the subject space can be easily estimated using models that predict an environment with air conditioners placed in a desired manner.

The element model may include a heating element model for predicting an effect of a heating element, which is present in the space, on the air environment of the space.

With this, the air environment in the subject space can be easily estimated using models that predict an environment with heating elements placed in a desired manner.

The effect of the heating element on the air environment of the space may be an effect of heat generated by the heating element.

With this, the air environment in the subject space can be easily estimated taking into account the effects of heat generated by the heating element.

The element model may include a non-heating element model for predicting an effect of a non-heating element, which is present in the space, on the air environment of the space.

With this, the air environment in the subject space can be easily estimated using models that predict an environment with non-heating elements placed in a desired manner.

The element model may include an external environment model for predicting an effect of an external environment of the space on the air environment of the space.

With this, the air environment in the subject space can be easily estimated using models that predict the effects of a desired external environment.

The element model may further include a first substance model for predicting an effect of the external environment on the air environment of the space exerted through a first substance constituting an outer surface of the space.

With this, the air environment in the subject space can be easily estimated using models that predict the effects of the external environment with the first substances placed in a desired manner.

The element model may further include a second substance model for predicting an effect of a second substance on the air environment of the space, the second substance controlling the effect exerted by the external environment through the first substance.

With this, the air environment in the subject space can be easily estimated using models that predict the effects of the external environment exerted through the first substances with the second substances placed in a desired manner.

The element model further may include a medium model for predicting an effect of the external environment on the air environment of the space exerted by a medium directly flowing into the space.

With this, the air environment in the subject space can be easily estimated using models that predict the effects of the external environment with the medium in a desired state.

The element model may further include a second substance model for predicting an effect of a second substance on the air environment of the space, the second substance controlling the effect of the external environment exerted by the medium.

With this, the air environment in the subject space can be easily estimated using models that predict the effects of the external environment exerted by the medium with the second substances placed in a desired manner.

The information processing device of the present disclosure may further include: a target acquisition section acquiring a target air environment of the space; and a control section controlling the element provided in the subject space to reduce a difference between the air environment in the subject space estimated by the estimation section and the target air environment of the space acquired by the target acquisition section.

With this, the air environment in the estimated subject space can be closer to the target air environment.

The placement acquisition section may acquire the information on the placement by accepting designation of a position of an object image corresponding to each of the elements on a screen.

With this, information on the placement of elements can be acquired by performing intuitive operations on the screen.

The placement acquisition section may accept designation of orientation of each of the elements in the subject space on the screen.

With this, the orientation of elements can be acquired by performing operations on the screen.

The placement acquisition section may acquire the information on the placement including information on a position of each of the elements in at least one of a vertical direction and a horizontal direction in the subject space.

With this, the air environment in the target space can be easily estimated even if the desired position of the element is in at least one of a vertical direction and a horizontal direction.

The estimation section may estimate the air environment in the subject space using the plural element models taking into account mutual effects among the plural elements.

With this, the air environment in the subject space can be easily estimated taking into account the effects among the plural elements.

A program of the present disclosure causes a computer to execute: a function of storing an element model created for each of elements affecting an air environment of a space, the element model predicting an effect of each of the elements on the air environment of the space; a function of acquiring information on placement of each of the elements provided in a predetermined subject space; and a function of estimating an air environment in the subject space using the acquired information on the placement of each of the elements and the element model corresponding to each of the elements.

According to a computer installing the program, the air environment in the subject space can be easily estimated using models that predict an environment with elements placed in a desired manner.

Brief Description of Drawings

FIG. 1 is a diagram showing an overall configuration example of an air environment control system to which the present embodiment is applied;

FIG. 2 is a diagram showing a hardware configuration example of an information processing device in the present embodiment;

FIG. 3 is a block diagram showing a functional configuration example of the information processing device in the present embodiment;

FIG. 4 is a flowchart showing an operation example of the information processing device in the present embodiment;

FIG. 5 is a diagram showing an example of an input screen for inputting information on placement acquired in the present embodiment;

FIG. 6 is a diagram showing an example of an input screen for inputting information on a target temperature acquired in the present embodiment;

FIG. 7 is a diagram showing an example of information on a temperature acquired in the present embodiment;

FIG. 8 is a diagram showing an example of a temperature at each division estimated in the present embodiment;

FIG. 9 is a diagram showing an example of control by an air conditioning device using a control parameter output in the present embodiment; and

FIGS. 10A and 10B are diagrams each showing another example of an input screen for inputting information on placement acquired in the present embodiment.

Description of Embodiment

Hereinafter, an embodiment will be described in detail with reference to attached drawings.

[Overall configuration of air environment control system]

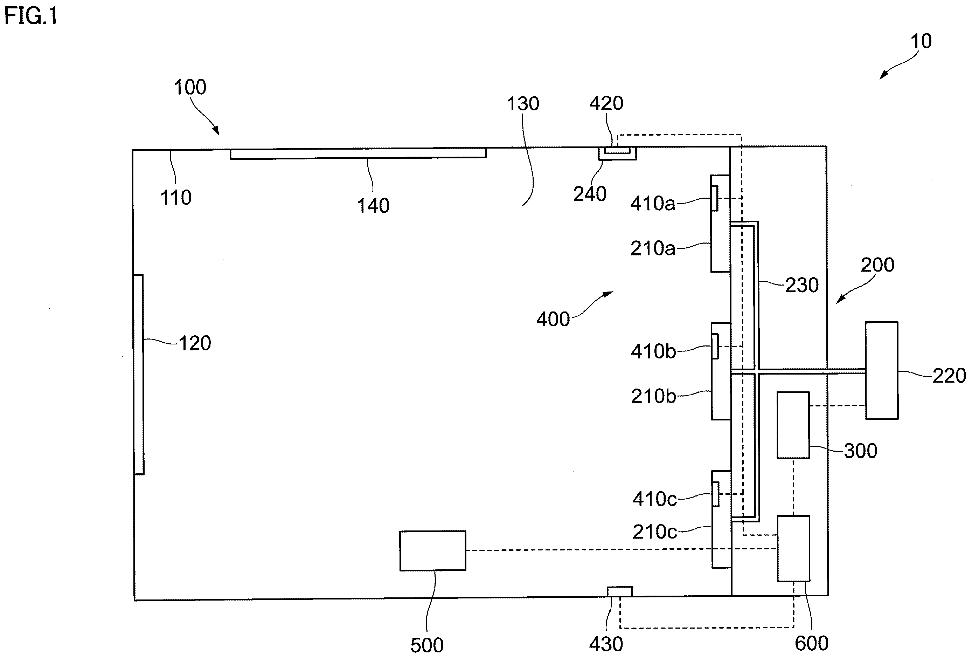

FIG. 1 is a diagram showing an overall configuration example of an air environment control system 10 to which the present embodiment is applied. The air environment control system 10 is a system that controls an air environment in a subject space 100. The air environment in the subject space 100 includes various types such as a temperature, a humidity, a carbon dioxide concentration, an oxygen concentration, an airflow, and an odor, but in the following, the temperature is described as an example. As shown in the figure, the air environment control system 10 includes an air conditioning device 200, a control device 300, a temperature sensor 400, an input/output device 500, and an information processing device 600.

The subject space 100 is a space whose air environment is to be controlled by the air environment control system 10. The subject space 100 is a space surrounded by a wall 110, a door 120, a floor 130, and a ceiling (not shown). The wall 110 is provided with a window 140. Hereinafter, a substance constituting the outer surface of the subject space 100 such as the wall 110, the door 120, the floor 130, the ceiling (not shown), or the window 140 is called a first substance. In the subject space 100, indoor units 210a to 210c and a remote controller 240 (hereinafter referred to as "remocon") of the air conditioning device 200 to be described later, a third temperature sensor 430 (retrofit sensor) to be described later, and the input/output device 500 to be described later are installed. Furthermore, in the subject space 100, though not illustrated, fixtures emitting heat such as lighting, personal computers, monitors, and printers (hereinafter referred to as "heat-generating fixtures"), and fixtures not emitting heat such as desks, chairs, sofas, tables, and rugs (hereinafter, referred to as "non-heat-generating fixtures") are placed. In addition, in the subject space 100, though not illustrated, substances such as curtains and blinds that control the effects of the external environment such as a temperature, a humidity, an amount of solar radiation, an angle of solar radiation, a wind speed, and a wind pressure on the subject space 100 are placed. Hereinafter, the substance controlling the effects of the external environment on the subject space 100, such as the curtain or the blind is referred to as a second substance.

The air conditioning device 200 is a device that conditions the air in the subject space 100. The air conditioning device 200 includes the indoor units 210a to 210c, an outdoor unit 220, piping 230, and the remocon 240. The indoor units 210a to 210c are installed in the subject space 100 and absorb heat from the air in the subject space 100 or discharge heat to the inside of the subject space 100 by exchanging heat between the refrigerant coming through the piping 230 and the air in the subject space 100. The outdoor unit 220 is installed outside the subject space 100 and discharges heat to the inside of the subject space 100 or absorbs heat from the air in the subject space 100 by exchanging heat between the refrigerant coming through the piping 230 and the air in the subject space 100. The piping 230 is a pipe connecting the indoor units 210a to 210c and the outdoor unit 220, through which the refrigerant passes. The remocon 240 is a device for remotely operating the air conditioning device 200. Note that the indoor units 210a to 210c are shown in the figure, but in the case where there is no need to distinguish the indoor units, the units are sometimes referred to as the indoor units 210. The figure shows three indoor units 210; however, one, two, or four or more indoor units 210 may be installed.

The control device 300 is a device that controls the air conditioning device 200 to operate based on the set requirements.

The temperature sensor 400 is installed at a predetermined position in the subject space 100, and measures the temperature at the predetermined position. The temperature sensor 400 includes first temperature sensors 410a to 410c, a second temperature sensor 420, and a third temperature sensor 430. The first temperature sensors 410a to 410c are temperature sensors installed in the indoor units 210a to 210c, respectively, and measure the inlet temperature, which is the temperature of the air sucked into indoor units 210a to 210c. The second temperature sensor 420 is the temperature sensor of a thermistor of the remocon 240 to measure the temperature of the air around the remocon 240. However, depending on the remocon 240, the second temperature sensor 420 is not installed. The third temperature sensor 430 is a temperature sensor installed retrospectively in the subject space 100 to measure the temperature of the air in the subject space 100. However, there may be a configuration in which the third temperature sensor 430 is not installed.

The input/output device 500 is, for example, placed in the subject space 100, and accepts the user operations to input information on placement of the indoor units 210, the remocon 240, the third temperature sensor 430, the fixtures, the first substances, the second substances, etc., and information on the gaps in the first substances. In addition, the input/output device 500 accepts the user operation to input the target temperature at each position in the subject space 100. At that time, the input/output device 500 outputs an image object representing the subject space 100, and by placing icons on the image object, the placement information and the target temperature may be input. In addition, by placing the icons in desired orientations on the image object, the input/output device 500 may allow input of orientation information. The input/output device 500 may be a touch panel, for example.

Based on the placement information for each element such as the indoor unit 210, the fixture, the first substance, and the second substance in the subject space 100, the information processing device 600 creates a superposition model by superimposing the physical models of respective elements stored in advance. The information processing device 600 then estimates the temperature at each position in the subject space 100 using the temperature measured by the temperature sensor 400 and the superposition model. The information processing device 600 then controls the air conditioning device 200 so that the difference between the target temperature at each position input by the user and the estimated temperature at each position is reduced.

[Hardware configuration of information processing device]

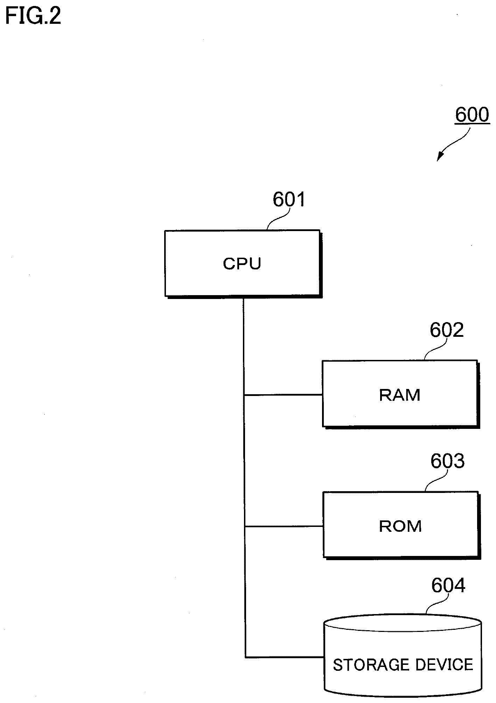

FIG. 2 is a diagram showing a hardware configuration example of the information processing device 600 in the present embodiment. As shown in the figure, the information processing device 600 includes a CPU (Central Processing Unit) 601, which is an arithmetic unit, a RAM (Random Access Memory) 602, which is a storage unit, a ROM (Read Only Memory) 603, and a storage device 604. The RAM 602 is a main storage device (main memory), and used as a working memory when the CPU 601 performs arithmetic processing. The ROM 603 holds programs and data of setting values prepared in advance, etc., and the CPU 601 can execute processing by directly reading the programs and data from the ROM 603. The storage device 604 is a storing unit for programs and data. The storage device 604 stores the programs, and the CPU 601 reads the programs stored in the storage device 604 into the main storage device to execute thereof. In addition, the storage device 604 stores the processing results by the CPU 601 to preserve thereof. As the storage device 604, for example, a magnetic disk device, an SSD (Solid State Drive), etc. can be used.

[Functional configuration of information processing device]

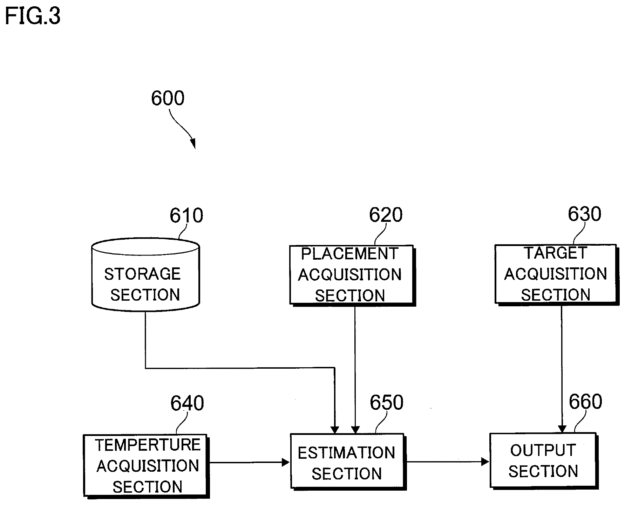

FIG. 3 is a block diagram showing a functional configuration example of the information processing device 600 in the present embodiment. As shown in the figure, the information processing device 600 in the present embodiment includes a storage section 610, a placement acquisition section 620, a target acquisition section 630, a temperature acquisition section 640, an estimation section 650, and an output section 660.

The storage section 610 stores the physical model of the element affecting the air environment of the subject space 100 (hereinafter, referred to as an "element model"). Here, an element is not a component of air such as oxygen, carbon dioxide, or moisture in the subject space 100, but means an object or a living thing such as the indoor unit 210, the fixture, the external environment, the substance, or a medium, to be described below.

The element may be, for example, the indoor unit 210 of the air conditioning device 200. In this case, the element model is the physical model of the air conditioning device 200 (hereinafter referred to as an "air conditioner model"). The air conditioner model is a model for predicting the effect of the air conditioning device 200 on the temperature at each position in the subject space 100 in the case where the indoor unit 210 of the air conditioning device 200 is at a specified position in the subject space 100.

In addition, the element may be the fixture, for example. The fixtures include the heat-generating fixtures and the non-heat-generating fixtures.

In the case where the element is the heat-generating fixture, the element model is the physical model of the heat-generating fixture (hereinafter referred to as a "heat-generating fixture model"). The heat-generating fixture model is a model for predicting the effect of the heat-generating fixture on the temperature at each position in the subject space 100 by interrupting the air flow or generating heat in the case where the heat-generating fixture is at a specified position in the subject space 100. Note that not only the heat-generating fixture, but also an animal such as a human or a plant may affect the temperature at each location in the subject space 100 by interrupting the air flow or generating heat in some cases. Therefore, the heat-generating fixture may be regarded wider as a heating element that generates heat, and may include a physical model of an animal or a plant. In this sense, the heat-generating fixture model is an example of a heating element model for predicting the effect of the heating element present in the space on the air environment of the space.

In the case where the element is the non-heat-generating fixture, the element model is the physical model of the non-heat-generating fixture (hereinafter referred to as a "non-heat-generating fixture model"). The non-heat-generating fixture model is a model for predicting the effect of the non-heat-generating fixture on the temperature at each position in the subject space 100 by interrupting the air flow in the case where the non-heat-generating fixture is at a specified position in the subject space 100. Note that, in addition to the non-heat-generating fixture, there are items that affect the temperature at each position in the subject space 100 by interrupting the air flow. Therefore, the non-heat-generating fixture may be regarded wider as a non-heating element that does not generate heat. In this sense, the non-heat-generating fixture model is an example of a non-heating element model for predicting the effect of the non-heating element present in the space on the air environment of the space.

Furthermore, the element may be, for example, the external environment such as the temperature, the humidity, the amount of solar radiation, the angle of solar radiation, the wind speed, or the wind pressure outside the subject space 100. In this case, the element model is the physical model of the external environment (hereinafter referred to as an "external environment model"). The external environment model is a model for predicting the effect of the external environment of the subject space 100 on the temperature at each position in the subject space 100.

In addition, the element may be, for example, the first substance such as the ceiling, the wall 110, the floor 130, or the window 140 that conducts, transfers, or radiates the external environment. In this case, the element model is the physical model of the first substance (hereinafter referred to as a "first substance model"). The first substance model is a model for predicting the effect of the external environment outside the subject space 100 on the temperature at each position in the subject space 100 via the first substance in the case where the first substance is at a specified position on the outer surface of the subject space 100.

In addition, the element may be, for example, a medium such as a draft that allows the external environment to directly flow in. In this case, the element model is the physical model of the medium (hereinafter referred to as a "medium model"). The medium model is a model for predicting the effect of the external environment outside the subject space 100 on the temperature at each position in the subject space 100 via the medium in the case where a gap, through which the medium directly flows in, is at a specified position on the outer surface of the subject space 100.

In addition, the element may be the second substance such as a curtain or a blind that controls the effect of the external environment via the first substance or by the medium that directly flows in. In this case, the element model is the physical model of the second substance (hereinafter referred to as a "second substance model"). The second substance model is a model for predicting the effect on the temperature at each position in the subject space 100 by controlling the effect of the external environment given via the first substance or by the medium that directly flows in when the second substance is at a specified position in the subject space 100.

In the present embodiment, the storage section 610 is provided as an example of a storage section that stores the element model created for each element that affects an air environment of a space to predict the effect of the element on the air environment of the space.

The placement acquisition section 620 acquires information on the placement of elements in the subject space 100 from the input/output device 500. Specifically, the placement acquisition section 620 acquires information on the placement of the indoor units 210 and remocon 240 in the subject space 100 from the input/output device 500. At that time, the placement acquisition section 620 acquires information on the placement of the first temperature sensors 410a to 410c from the placement information of the indoor units 210a to 210c. In addition, if the second temperature sensor 420 is installed to the remocon 240, the placement acquisition section 620 acquires the placement information of the second temperature sensor 420 from the placement information of the remocon 240. If the third temperature sensor 430 is installed, the placement acquisition section 620 also acquires placement information of the third temperature sensor 430 in the subject space 100 from the input/output device 500. Furthermore, the placement acquisition section 620 acquires information on the placement of the fixtures, the first substances, and the second substances and information on the gaps in the first substances in the subject space 100 from the input/output device 500. Here, the information on the placement of the elements in the subject space 100 may include information on positions of the elements in the vertical and/or horizontal direction in the subject space 100.

Alternatively, depending on the type of the elements, the placement acquisition section 620 may acquire information on orientations of the elements in the subject space 100 from the input/output device 500.

In the present embodiment, the placement acquisition section 620 is provided as an example of the placement acquisition section that acquires information on placement of each element in a predetermined subject space.

The target acquisition section 630 acquires the target temperature at each position in the subject space 100 from the input/output device 500. In the present embodiment, the target acquisition section 630 is provided as an example of a target acquisition section that acquires a target air environment of the space.

The temperature acquisition section 640 acquires the temperatures measured by the first temperature sensors 410a to 410c, the second temperature sensor 420, and the third temperature sensor 430. However, the temperature acquisition section 640 acquires the temperature measured by the second temperature sensor 420 only when the second temperature sensor 420 is installed to the remocon 240. In addition, the temperature acquisition section 640 acquires the temperature measured by the third temperature sensor 430 only when the third temperature sensor 430 is installed. Consequently, the following four patterns can be considered for the temperature acquisition section 640 to acquire the temperatures. The first one is a pattern that acquires the temperatures measured by the first temperature sensors 410a to 410c. The second one is a pattern that acquires the temperatures measured by the first temperature sensors 410a to 410c and the temperature measured by the second temperature sensor 420. The third one is a pattern that acquires the temperatures measured by the first temperature sensors 410a to 410c and the temperature measured by the third temperature sensor 430. The fourth one is a pattern that acquires the temperatures measured by the first temperature sensors 410a to 410c, the temperature measured by the second temperature sensor 420, and the temperature measured by the third temperature sensor 430.

The estimation section 650 first determines a specific position p, a temperature around which is to be obtained, from among plural positions in the subject space 100, and calculates the temperature at the position. For the purpose, the estimation section 650 calculates the temperature difference $\Delta T$, which is obtained by subtracting the temperature at the specific position p from the temperature acquired by the temperature acquisition section 640, using a physical model. The physical model is a superposition model created by superimposing an element model, which has been read from the storage section 610 by the estimation section 650, on a physical model of the subject space 100 (hereinafter referred to as a "subject space model") based on the placement information acquired by the placement acquisition section 620. In the following, suppose that each physical model constituting the superposition model is a term, and each term will be described.

The first term corresponds to the subject space model, and prescribes the thermal diffusivity and the thermal conductivity from the positions, where the respective first temperature sensors 410a to 410c, second temperature sensor 420, third temperature sensor 430 are installed, to the specific position p. The thermal diffusivity and thermal conductivity should be calculated from information on the preset size of the subject space 100. Assuming the thermal diffusivity as $\alpha$, the thermal conductivity as $\beta$, and the position where each of the first temperature sensors 410a to 410c, second temperature sensor 420, and third temperature sensor 430 is installed as n, the term is denoted by $f(\alpha, \beta, n, p)$.

The second term corresponds to the air conditioner model, and prescribes the effects of the blow-out temperature, the wind direction, the wind speed, and the air volume of the indoor unit 210 of the air conditioning device 200 on the temperature at the specific position p. The blow-out temperature, the wind direction, the wind speed, and the air volume of the indoor unit 210 should be dynamically acquired from the control device 300. Suppose that the blow-out temperature, the wind direction, the wind speed, and the air volume of the indoor unit 210 are $T_b$, $B_d$, $B_s$, and $B_v$, respectively, the position where the indoor unit 210 is placed is $n_1$, the term is denoted as $g_1(T_b, B_d, B_s, B_v, n_1, p)$.

Note that, in the case where the blow-out directions of the two indoor units 210 face each other, the specific position p therebetween is affected by blowing out from both indoor units 210. In this case, the overall effect should be expressed by simply superimposing the second terms that prescribe the effect on the temperature at the specific position p. In addition, there is also a case in which effects of blow-out from both indoor units 210 are different, such as when the specific position p is toward one side of the two indoor units 210. In this case, in the second term, it is possible to express the effects of the plural indoor units 210 by superposition for all specific positions p by calculating the effects for each distance from the indoor units 210. In this sense, the estimation section 650 is an example of the estimation section that estimates the air environment in the subject space using plural element models taking into account the mutual effects among the plural elements.

The third term corresponds to the heat-generating fixture model, and prescribes the effect of the heat-generating fixture, as an interrupting body that interrupts the air flow inside the subject space 100 or as a heating element, on the temperature at the specific position p. The information on the heat generated by the heat-generating fixture as a heating element should be acquired from the information on the heat-generating fixture set in advance. In addition, the effect of the heat-generating fixture as an interrupting body depends on the size of the heat-generating fixture, but the size of the heat-generating fixture should be acquired from the information on the heat-generating fixture set in advance. Suppose that the information on the heat generated by the heat-generating fixture is e, the size of the heat-generating fixture is $s_1$, the specific heat is hi, and the position where the heat-generating fixture is placed is $n_2$, the term is denoted as $g_2(e, s_1, hi, n_2, p)$.

The fourth term corresponds to the non-heat-generating fixture model, and prescribes the effect of the non-heat-generating fixture, as an interrupting body that interrupts the air flow inside the subject space 100, on the temperature at the specific position p. The effect of the non-heat-generating fixture as an interrupting body depends on the size of the heat-generating fixture, but the size of the non-heat-generating fixture should be acquired from the information on the heat-generating fixture set in advance. Suppose that the size of the heat-generating fixture is $s_2$, the specific heat is $h_2$, and the position where the non-heat-generating fixture is placed is $n_3$, the term is denoted as $g_3(s_2, h_2, n_3, p)$.

The fifth term corresponds to the external environment model, and prescribes the effect of the external environment outside the subject space 100 such as the temperature, the humidity, the amount of solar radiation, the angle of solar radiation, the wind speed, and the wind pressure on the temperature at the specific position p. The temperature, the humidity, the amount of solar radiation, the angle of solar radiation, the wind speed, and the wind pressure outside the subject space 100 should be acquired from weather information, etc. in advance. Suppose that the temperature, the humidity, the amount of solar radiation, the angle of solar radiation, the wind speed, and the wind pressure outside the subject space 100 are $O_t$, $O_h$, $O_{sv}$, $O_{sa}$, $O_{wv}$, and $O_{wp}$, respectively, and the position corresponding to the external environment is $n_4$, the term is denoted as $g_4(O_t, O_h, O_{sv}, O_{sa}, O_{wv}, O_{wp}, n_4, p)$.

The sixth term corresponds to the first substance model, and prescribes the effect of the external environment on the temperature at the specific position p via the first substance such as the ceiling, the wall 110, the floor 130, and the window 140. The effect of the external environment via the first substance depends on the size, the thermal insulation performance, etc. of the first substance, and the size, the thermal insulation performance, etc. of the first substance should be acquired from the information on the first substance set in advance. Suppose that the size and the thermal insulation performance of the first substance are $s_3$ and i, respectively, and the position where the first substance is placed is $n_5$, the term is denoted as $g_5(s_3, i, n_5, p)$.

The seventh term corresponds to the medium model, and prescribes the effect of the external environment on the temperature at the specific position p by the medium such as the draft directly flowing from the first substance such as the ceiling, the wall 110, the floor 130, and the window 140. The effect of the external environment by the medium depends on the size of the gap in the first substance, the opening/closing degree of the window 140, etc.; of these, the size of the gap in the first substance should be acquired from the information on the first substance set in advance, and the opening/closing degree of the window 140 should be dynamically acquired every time the window 140 is opened and closed. Suppose that the size of the gap in the first substance and the opening/closing rate of the window 140 are $s_g$ and $W_o$, respectively, and the position where the medium directly flows in is $n_6$, the term is denoted as $g_6(S_g, W_o, n_6, p)$.

The eighth term corresponds to the second substance model, and prescribes the effect on the temperature at the specific position p provided by the second substance such as the curtain or the blind controlling the effect provided by the medium flowing through the first substance or directly from the external environment outside the subject space 100. The control by the second substance depends on the size and the transmittance of the second substance, and the size and the transmittance of the second substance should be acquired from the information on the second substance set in advance. Suppose that the size and the transmittance of the second substance are $s_3$ and Ct, respectively, and the position where the second substance is placed is $n_7$, the term is denoted as $g_7(s_3, Ct, n_7, p)$.

The estimation section 650 calculates the temperature difference $\Delta T$ by superimposing the above terms as in the following expression. However, in the following expression, the parentheses describing the parameters of the functions f, $g_1$, $g_2$, $g_3$, $g_4$, $g_5$, $g_6$, $g_7$ of the respective terms are omitted.

[Expression 1]

$$\Delta T = \sum_{n} f + \sum_{n_1} g_1 + \sum_{n_2} g_2 + \sum_{n_3} g_3 + \sum_{n_4} g_4 + \sum_{n_5} g_5 + \sum_{n_6} g_6 + \sum_{n_7} g_7$$

After that, the estimation section 650 creates the superposition model by performing the same processing for all positions in the subject space 100 as the specific position p. On that occasion, the estimation section 650 creates the superposition model using any one of the first temperature sensors 410a to 410c, the second temperature sensor 420, and the third temperature sensor 430. For example, first, in the case where only the first temperature sensors 410a to 410c are installed, the estimation section 650 should create the superposition model using only the first temperature sensors 410a to 410c. Second, in the case where the first temperature sensors 410a to 410c, and the second temperature sensor 420 are installed, the estimation section 650 should create the superposition model using a combination of the first temperature sensors 410a to 410c and the second temperature sensor 420. Third, in the case where the first temperature sensors 410a to 410c and the third temperature sensor 430 are installed, the estimation section 650 should create the superposition model using a combination of the first temperature sensors 410a to 410c and the third temperature sensor 430. Fourth, in the case where the first temperature sensors 410a to 410c, the second temperature sensor 420, and the third temperature sensor 430 are installed, the estimation section 650 should create the superposition model using a combination of the first temperature sensors 410a to 410c, the second temperature sensor 420, and the third temperature sensor 430.

When the superposition model is created in this way, the estimation section 650 estimates the temperature at each position in the subject space 100 by inputting the temperature acquired by the temperature acquisition section 640 into the superposition model as an explanatory variable.

In the present embodiment, the estimation section 650 is provided as an example of an estimation section that estimates the air environment in the subject space using the information of the placement of each element and the element model corresponding to the element.

The output section 660 outputs a control parameter to the control device 300, the control parameter controlling the air conditioning device 200 so that the difference between the target temperature at each position acquired by the target acquisition section 630 and the temperature at each position estimated by the estimation section 650 is reduced. Here, examples of the control parameter include the blow-out area, the number of revolutions of fans (air volume), the refrigerant temperature (blow-out temperature), and the flap angle of the air conditioning device 200. In the present embodiment, the output section 660 is provided as an example of a control section that controls the elements provided in the subject space so that the difference between the air environment in the subject space and the target air environment of the space is reduced. In addition, in the present embodiment, the air conditioning device 200 is used as an example of an element controlled by the control section.

[Operation of information processing device]

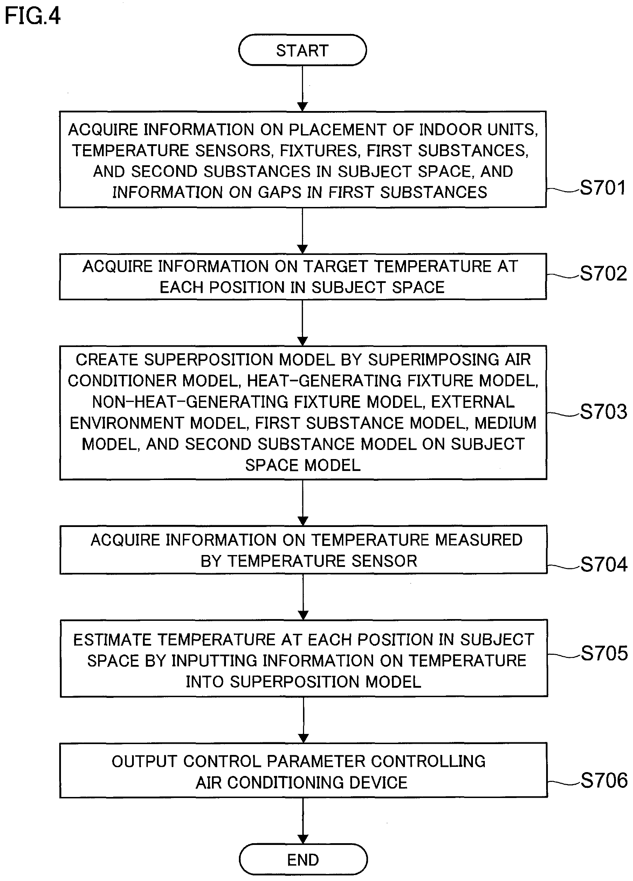

FIG. 4 is a flowchart showing an operation example of the information processing device 600 in the present embodiment. Note that, here, the first temperature sensors 410a to 410c, the second temperature sensor 420, and the third temperature sensor 430 are represented by the temperature sensors 400.

As shown in the figure, in the information processing device 600, first, the placement acquisition section 620 acquires the information on the placement of the indoor units 210, the temperature sensors 400, the fixtures, the first substances, and the second substances in the subject space 100, and the information on the gaps in the first substances (step 701). In addition, the target acquisition section 630 acquires the information on the target temperature at each position in the subject space 100 (step 702).

Next, in the information processing device 600, the estimation section 650 creates the superposition model by superimposing the air conditioner model, the heat-generating fixture model, the non-heat-generating fixture model, the external environment model, the first substance model, the medium model, and the second substance model, which have been stored in the storage section 610, on the subject space model (step 703). On that occasion, the estimation section 650 should create the subject space model based on the information on the placement of the temperature sensors 400 acquired in step 701. In addition, the estimation section 650 should create the superposition model by superimposing the air conditioner model, the heat-generating fixture model, the non-heat-generating fixture model, the external environment model, the first substance model, the medium model, and the second substance model based on the information on the placement of the indoor units 210, the fixtures, the first substances, and the second substances and the information on the gaps in the first substances acquired in step 701.

Subsequently, the temperature acquisition section 640 acquires the information on the temperature measured by the temperature sensor 400 (step 704). Consequently, the estimation section 650 estimates the temperature at each position in the subject space 100 by inputting the information on the temperature acquired in step 704 into the superposition model created in step 703 (step 705).

After that, in the information processing device 600, the output section 660 outputs the control parameter that controls the air conditioning device 200 to the control device 300 (step 708). Specifically, the output section 660 outputs the control parameter to reduce the difference between the target temperature at each position in the subject space 100 acquired in step 702 and the temperature at each position in the subject space 100 estimated in step 705.

[Specific example]

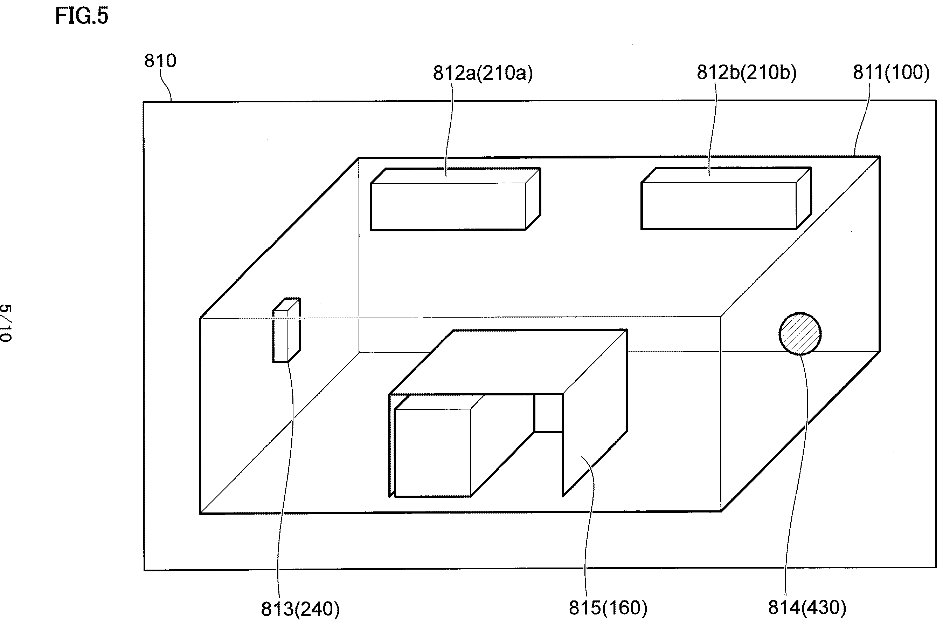

FIG. 5 is a diagram showing an input screen 810, which is an example of an input screen for inputting the placement information acquired in step 701 in FIG. 4.

As shown in the figure, the input screen 810 shows a subject space object 811 that is an image object representing the subject space 100 in three dimensions. In this state, the user inputs information on the placement of each element by placing an image object representing each element on the subject space object 811. In the figure, the user inputs the information on the placement of the indoor units 210a and 210b by placing indoor unit objects 812a and 812b representing the indoor units 210a and 210b, respectively, on the subject space object 811. In addition, the user inputs the information on the placement of the remocon 240 by placing a remocon object 813 representing the remocon 240 on the subject space object 811. Furthermore, the user inputs information on the placement of the third temperature sensor 430 by placing a retrofit sensor object representing the third temperature sensor 430 (retrofit sensor) on the subject space object 811. Still further, the user inputs the information on the placement of the desk 160 by placing a desk object 815 representing the desk 160, which is an example of the fixture, on the subject space object 811.

Here, the subject space object 811 should be displayed by the user creating a three-dimensional drawing corresponding to the size of the subject space 100 in the input screen 810. In addition, the indoor unit objects 812a and 812b, the remocon object 813, the retrofit sensor object 814, the desk object 815, etc. should be placed by the user selecting thereof from a list prepared on the input screen 810.

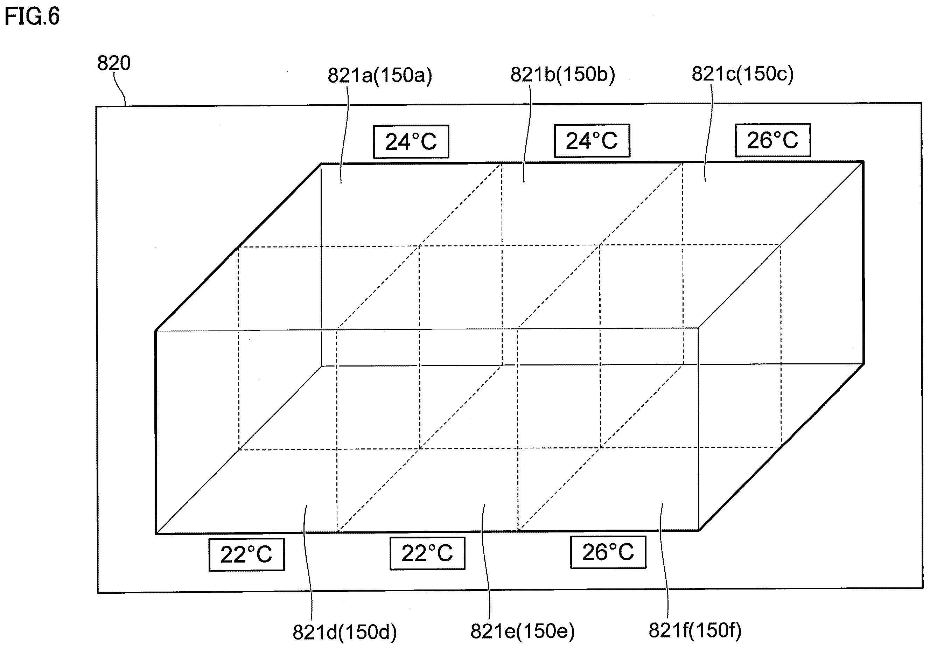

FIG. 6 is a diagram showing an input screen 820, which is an example of an input screen for inputting information on the target temperature acquired in step 702 in FIG. 4.

As shown in the figure, the input screen 820 shows division objects 821a to 821f that are the image objects representing divisions 150a to 150f in the subject space 100 in three dimensions, respectively. In this state, the user inputs the target temperatures in the divisions 150a to 150f by placing the target temperatures near the division objects 821a to 821f representing the divisions 150a to 150f, respectively. In the figure, the user inputs 24°C, 24°C, and 26°C as the target temperatures in the divisions 150a, 150b, and 150c, respectively. In addition, the user inputs 22°C, 22°C, and 26°C as the target temperatures in the divisions 150d, 150e, and 150f, respectively.

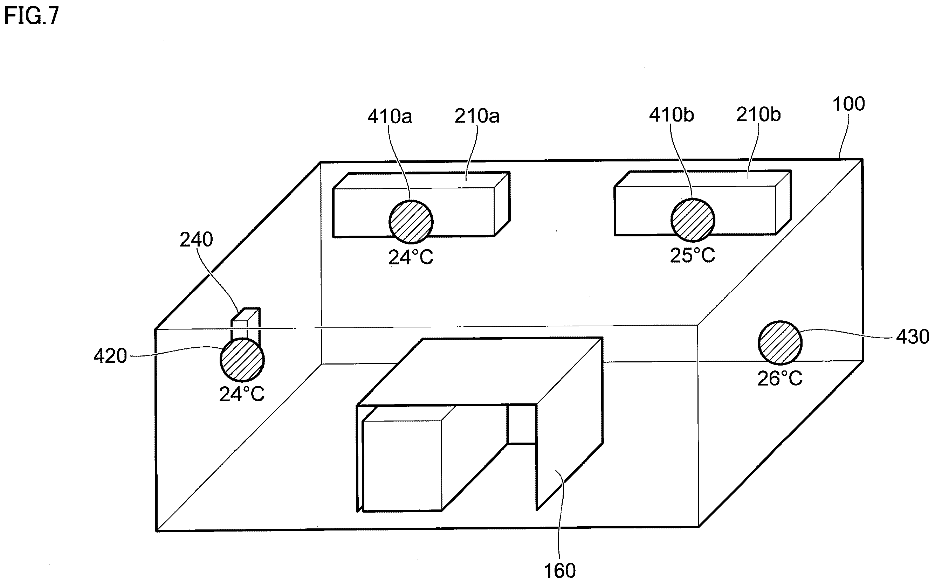

FIG. 7 is a diagram showing an example of information on the temperature acquired in step 704 shown in FIG. 4.

As shown in the figure, it is assumed that the inlet temperature measured by the first temperature sensor 410a installed to the indoor unit 210a is 24°C, and the inlet temperature measured by the second temperature sensor 410b installed to the indoor unit 210b is 25°C. In addition, it is assumed that the temperature measured by the second temperature sensor 420 installed to the remocon 240 is 24°C. Furthermore, it is assumed that the temperature measured by the third temperature sensor 430, which is the retrofit sensor, is 24°C.

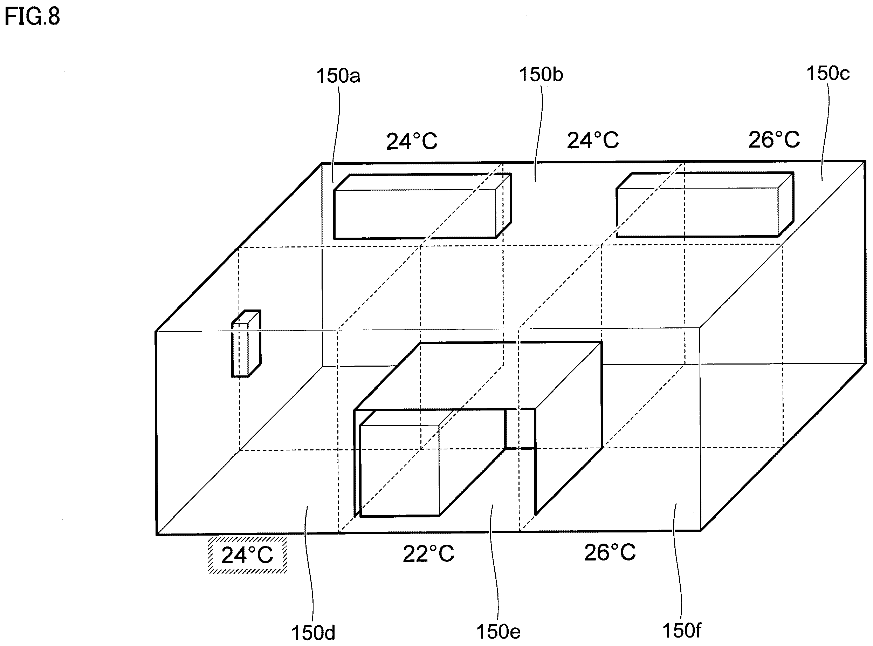

FIG. 8 is a diagram showing an example of the temperature in each division estimated in step 705 in FIG. 4.

As shown in the figure, the estimation section 650 estimates the temperatures in the divisions 150a to 150f by inputting the information on the temperature shown in FIG. 7 into the superposition model as the explanatory variable. It is assumed that the estimation section 650 estimated the temperatures in the divisions 150a, 150b, and 150c as 24°C, 24°C, and 26°C, respectively. In addition, it is assumed that the temperatures in the divisions 150d, 150e, and 150f were estimated as 24°C, 22°C, and 26°C, respectively.

Here, of the estimated temperatures in the divisions 150a to 150f, only the temperature in the diagonally hatched division 150d is different from the target temperature that has been input in the input screen 820 in FIG. 6. Specifically, the target temperature in the division 150d that has been input in the input screen 820 in FIG. 6 is 22°C, whereas the estimated temperature in the division 150d shown in FIG. 8 is 24°C. On the other hand, the target temperatures in the divisions, other than the division 150d, that have been input in the input screen 820 in FIG. 6 and the estimated temperatures in the divisions, other than the division 150d, shown in FIG. 8 are the same.

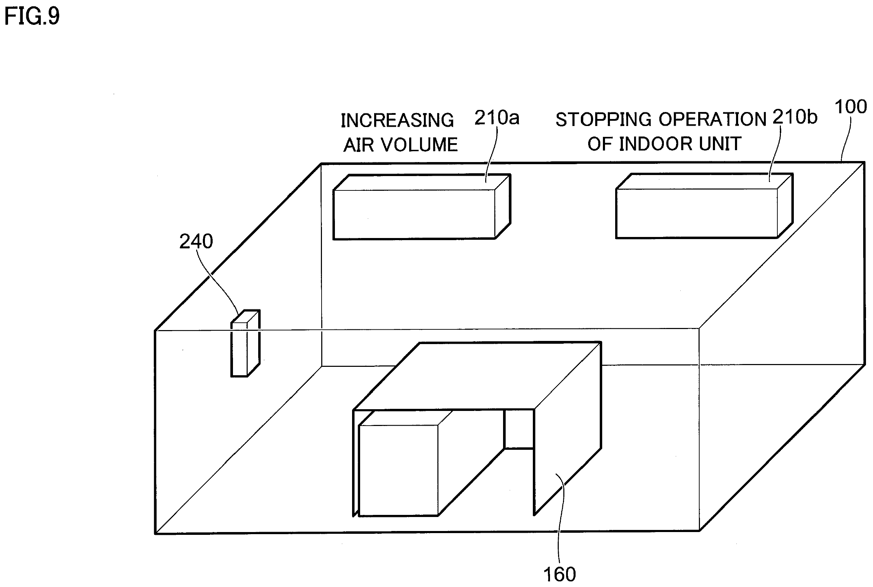

FIG. 9 is a diagram showing an example of control of the air conditioning device 200 by the control parameter output in step 706 in FIG. 4.

As described above, the target temperature in the division 150d that has been input in the input screen 820 in FIG. 6 is lower than the estimated temperature in the division 150d shown in FIG. 8. Then, as shown in the figure, the output section 660 changes the flap angle of the indoor unit 210a to the angle increasing the air volume by the control parameter. On the other hand, as described above, the target temperatures in the divisions 150c and 150f that have been input in the input screen 820 in FIG. 6 and the estimated temperatures in the divisions 150c and 150f shown in FIG. 8 are the same. Therefore, as shown in the figure, the output section 660 stops the operation of the indoor unit 210b by the control parameter.

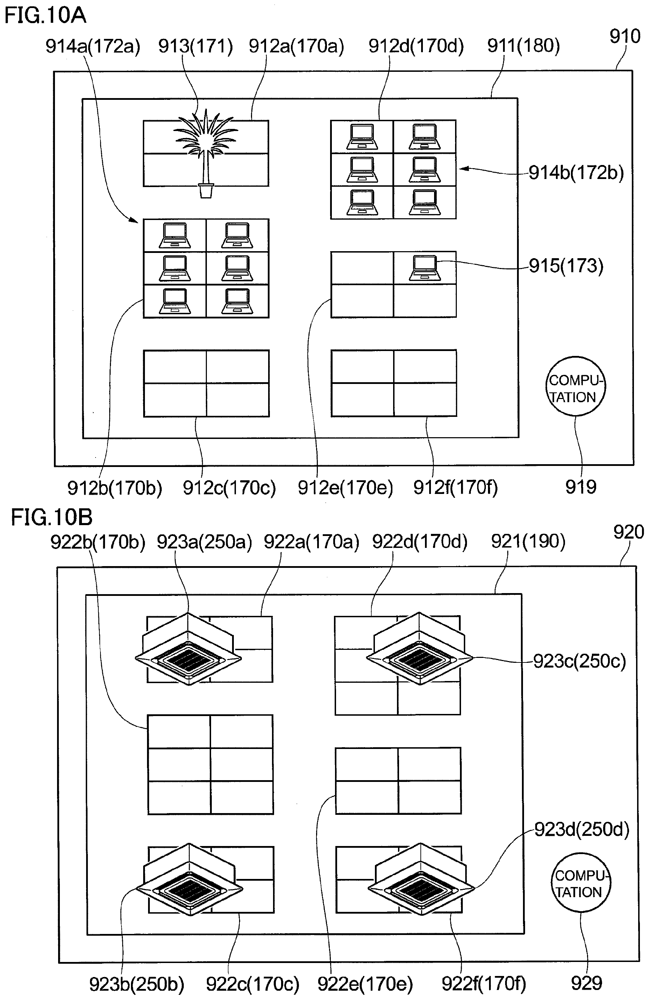

FIGS. 10A and 10B are diagrams showing input screens 910 and 920, respectively, which are other examples of the input screen for inputting the placement information acquired in step 701 in FIG. 4.

As shown in the figure, the input screens 910 and 920 show planar objects 911 and 921, each of which is an image object representing the subject space 100 in two dimensions, respectively. In addition, in the planar objects 911 and 921, desk group objects 912a to 912f and desk group objects 922a to 922f are placed, respectively, as rough indications for placing each element, each of the desk group objects 912a to 912f and the desk group objects 922a to 922f representing the desk groups 170a to 170f.

First, the input screen 910 in FIG. 10A shows a planar object 911 representing a plane 180 at a floor height of 130 mm to 700 mm in the subject space 100. In this state, the user inputs information on the placement of each element by placing the image object representing each element on the planar object 911. In the figure, the user inputs information on the placement of a plant 171 by placing a plant object 913 representing the plant 171 on the desk group object 912a in the planar object 911. In addition, the user inputs information on the placement of personal computer groups 172a and 172b by placing personal computer group objects 914a and 914b representing the personal computer groups 172a and 172b on the desk group objects 912b and 912d in the planar object 911. Furthermore, the user inputs information on the placement of a personal computer 173 by placing a personal computer object 915 representing the personal computer 173 on the desk group object 912e in the planar object 911.

Moreover, the input screen 920 in FIG. 10B shows a planar object 921 representing a plane 190 at a floor height of 130 mm to 2700 mm in the subject space 100. In this state, the user inputs information on the placement of each element by placing the image object representing each element on the planar object 921. In the figure, the user inputs information on the placement of ceiling-embedded indoor units 250a to 250d by placing indoor unit objects 923a to 923d representing the ceiling-embedded indoor units 250a to 250d on the desk group objects 922a, 922c, 922d and 922f in the planar object 921.

The temperature distribution in the subject space 100 may be displayed by pressing a computation button 919 on the input screen 910 in FIG. 10A and a computation button 929 on the input screen 920 in FIG. 10B.

[Program]

The processing performed by the information processing device 600 in the present embodiment is provided as, for example, a program such as application software.

The program causes a computer to execute: a function of storing an element model created for each of elements affecting an air environment of a space, the element model predicting an effect of each of the elements on the air environment of the space; a function of acquiring information on placement of each of the elements provided in a predetermined subject space; and a function of estimating an air environment in the subject space using the acquired information on the placement of each of the elements and the element model corresponding to each of the elements.

Note that it is possible to provide the program that implements the present embodiment by a communication tool, of course, and it is also possible to store thereof in a storage medium, such as a CD-ROM, to be provided.

Reference Signs List

10 Air environment control system
100 Subject space
200 Air conditioning device
300 Control device
400 Temperature sensor
500 Input/output device
600 Information processing device
610 Storage section
620 Placement acquisition section
630 Target acquisition section
640 Temperature acquisition section
650 Estimation section
660 Output section

## Claims

1. An information processing device (600) comprising:

   a storage section (610) adapted to store an element model created for each of elements affecting an air environment of a space, the element model predicting an effect of each of the elements on the air environment of the space in a case where each of the elements is at a specified position, an element being an indoor unit of an air conditioner, a heat-generating fixture or a non-heat-generating fixture;
   a placement acquisition section (620) adapted to acquire information on placement of each of the elements provided in a predetermined subject space (100);
   an estimation section (650) adapted to estimate an air environment in the subject space using a superposition model that is created, the superposition model being created by superimposing the element model which corresponds to each of the elements stored in the storage section on a physical model of the subject space based on the information on the placement of each of the elements acquired by the placement acquisition section;
   a target acquisition section (630) adapted to acquire a target air environment of the space; and
   a control section (660) adapted to control the air conditioner to reduce a difference between the air environment in the subject space estimated by the estimation section and the target air environment of the space acquired by the target acquisition section, wherein
   the element model is a model for predicting the effect of the element on the air environment at each position in the subject space.

2. The information processing device (600) according to claim 1, wherein the air environment of the space includes at least one of a temperature, a humidity, an airflow, and a concentration of carbon dioxide in the space.

3. The information processing device (600) according to claim 1, wherein the effect of the heating element on the air environment of the space is an effect of heat generated by the heating element.

4. The information processing device (600) according to claim 1, wherein the element model includes an external environment model for predicting an effect of an external environment of the space on the air environment of the space.

5. The information processing device (600) according to claim 4, wherein the element model further includes a first substance model for predicting an effect of the external environment on the air environment of the space exerted through a first substance constituting an outer surface of the space.

6. The information processing device (600) according to claim 5, wherein the element model further includes a second substance model for predicting an effect of a second substance on the air environment of the space, the second substance controlling the effect exerted by the external environment through the first substance.

7. The information processing device (600) according to claim 4, wherein the element model further includes a medium model for predicting an effect of the external environment on the air environment of the space exerted by a medium directly flowing into the space.

8. The information processing device (600) according to claim 7, wherein the element model further includes a second substance model for predicting an effect of a second substance on the air environment of the space, the second substance controlling the effect of the external environment exerted by the medium.

9. The information processing device (600) according to claim 1, wherein the placement acquisition section (620) is adapted to acquire the information on the placement by accepting designation of a position of an object image corresponding to each of the elements on a screen.

10. The information processing device (600) according to claim 9, wherein the placement acquisition section (620) is adapted to accept designation of orientation of each of the elements in the subject space on the screen.

11. The information processing device (600) according to claim 1, wherein the placement acquisition section (620) is adapted to acquire the information on the placement including information on a position of each of the elements in at least one of a vertical direction and a horizontal direction in the subject space.

**12.** The information processing device (600) according to claim 1, wherein the estimation section (650) is adapted to estimate the air environment in the subject space using a plurality of the element models taking into account mutual effects among a plurality of the elements.

**13.** A program causing a computer to execute:

a function of storing an element model created for each of elements affecting an air environment of a space, the element model predicting an effect of each of the elements on the air environment of the space in a case where each of the elements is at a specified position, an element being an indoor unit of an air conditioner, a heat-generating fixture or a non-heat-generating fixture;
a function of acquiring information on placement of each of the elements provided in a predetermined subject space;
a function of estimating an air environment in the subject space using a superposition model that is created, the superposition model being created by superimposing the element model which corresponds to each of the elements stored in the storage section on a physical model of the subject space based on the acquired information on the placement of each of the elements;
a function of acquiring a target air environment of the space; and
a function of controlling the air conditioner to reduce a difference between the air environment in the subject space estimated by the estimation section and the target air environment of the space acquired by the target acquisition section, wherein
the element model is a model for predicting the effect of the element on the air environment at each position in the subject space.

## Patentansprüche

**1.** Informationsverarbeitungsvorrichtung (600), umfassend:

einen Speicherabschnitt (610), angepasst, ein Elementmodell zu speichern, das für jedes der Elemente erstellt ist, die eine Luftumgebung eines Raums beeinflussen, wobei das Elementmodell eine Wirkung jedes der Elemente auf die Luftumgebung des Raums in einem Fall vorhersagt, in dem jedes der Elemente an einer angegebenen Position ist, wobei ein Element eine Inneneinheit einer Klimaanlage, ein wärmeerzeugender Einrichtungsgegenstand oder ein nicht-wärmeerzeugender Einrichtungsgegenstand ist;
einen Platzierungserfassungsabschnitt (620), angepasst, Informationen über die Platzierung jedes der Elemente zu erfassen, die in einem vorbestimmten Zielraum (100) bereitgestellt sind;
einen Schätzabschnitt (650), angepasst, eine Luftumgebung im Zielraum unter Verwendung eines Superpositionsmodells zu schätzen, das erstellt wird, wobei das Superpositionsmodell dadurch erstellt wird, dass das Elementmodell, das jedem der im Speicherabschnitt gespeicherten Elemente entspricht, auf ein physikalisches Modell des Zielraums basierend auf den Informationen über die Platzierung jedes der Elemente, die durch den Platzierungserfassungsabschnitt erfasst werden, superponiert wird;
einen Zielwerterfassungsabschnitt (630), angepasst, eine Ziel-Luftumgebung des Raums zu erfassen; und
einen Steuerabschnitt (660), angepasst, die Klimaanlage zu regeln, um eine Differenz zwischen der Luftumgebung im Zielraum, die durch den Schätzabschnitt geschätzt wird, und der Ziel-Luftumgebung des Raums, die durch den Zielwerterfassungsabschnitt erfasst wird, zu verringern, wobei
das Elementmodell ein Modell zum Vorhersagen der Wirkung des Elements auf die Luftumgebung an jeder Position im Zielraum ist.

**2.** Informationsverarbeitungsvorrichtung (600) nach Anspruch 1, wobei die Luftumgebung des Raums zumindest eine von einer Temperatur, einer Luftfeuchtigkeit, einer Luftströmung und einer Konzentration von Kohlendioxid im Raum einschließt.

**3.** Informationsverarbeitungsvorrichtung (600) nach Anspruch 1, wobei die Wirkung des Heizelements auf die Luftumgebung des Raums eine Wirkung von durch das Heizelement erzeugter Wärme ist.

**4.** Informationsverarbeitungsvorrichtung (600) nach Anspruch 1, wobei das Elementmodell ein Außenumgebungsmodell zum Vorhersagen einer Wirkung einer Außenumgebung des Raums auf die Luftumgebung des Raums einschließt.

5. Informationsverarbeitungsvorrichtung (600) nach Anspruch 4, wobei das Elementmodell ferner ein Substanzmodell einer ersten Substanz zum Vorhersagen einer Wirkung der Außenumgebung auf die Luftumgebung des Raums einschließt, die durch eine erste Substanz ausgeübt wird, die eine äußere Oberfläche des Raums bildet.

6. Informationsverarbeitungsvorrichtung (600) nach Anspruch 5, wobei das Elementmodell ferner ein Substanzmodell einer zweiten Substanz zum Vorhersagen einer Wirkung einer zweiten Substanz auf die Luftumgebung des Raums einschließt, wobei die zweite Substanz die durch die Außenumgebung über die erste Substanz ausgeübte Wirkung regelt.

7. Informationsverarbeitungsvorrichtung (600) nach Anspruch 4, wobei das Elementmodell ferner ein Mediumsmodell zum Vorhersagen einer Wirkung der Außenumgebung auf die Luftumgebung des Raums einschließt, die durch ein Medium ausgeübt wird, das direkt in den Raum strömt.

8. Informationsverarbeitungsvorrichtung (600) nach Anspruch 7, wobei das Elementmodell ferner ein Substanzmodell einer zweiten Substanz zum Vorhersagen einer Wirkung einer zweiten Substanz auf die Luftumgebung des Raums einschließt, wobei die zweite Substanz die durch das Medium ausgeübte Wirkung der Außenumgebung regelt.

9. Informationsverarbeitungsvorrichtung (600) nach Anspruch 1, wobei der Platzierungserfassungsabschnitt (620) angepasst ist, die Informationen über die Platzierung zu erfassen, indem er eine Bezeichnung einer Position eines Objektbildes, das jeweils einem der Elemente entspricht, auf einem Bildschirm akzeptiert.

10. Informationsverarbeitungsvorrichtung (600) nach Anspruch 9, wobei der Platzierungserfassungsabschnitt (620) angepasst ist, eine Bezeichnung einer Orientierung jedes der Elemente im Zielraum auf dem Bildschirm zu akzeptieren.

11. Informationsverarbeitungsvorrichtung (600) nach Anspruch 1, wobei der Platzierungserfassungsabschnitt (620) angepasst ist, die Informationen über die Platzierung einschließlich Informationen über eine Position jedes der Elemente in zumindest einer von einer vertikalen Richtung und einer horizontalen Richtung im Zielraum zu erfassen.

12. Informationsverarbeitungsvorrichtung (600) nach Anspruch 1, wobei der Schätzabschnitt (650) angepasst ist, die Luftumgebung im Zielraum unter Verwendung einer Vielzahl der Elementmodelle unter Berücksichtigung gegenseitiger Wirkungen unter einer Vielzahl der Elemente zu schätzen.

13. Programm, das einen Computer veranlasst, Folgendes auszuführen:

eine Funktion des Speicherns eines Elementmodells, das für jedes der Elemente erstellt ist, die eine Luftumgebung eines Raums beeinflussen, wobei das Elementmodell eine Wirkung jedes der Elemente auf die Luftumgebung des Raums in einem Fall vorhersagt, in dem jedes der Elemente an einer angegebenen Position ist, wobei ein Element eine Inneneinheit einer Klimaanlage, ein wärmeerzeugender Einrichtungsgegenstand oder ein nicht-wärmeerzeugender Einrichtungsgegenstand ist;
eine Funktion des Erfassens von Informationen über die Platzierung jedes der Elemente, die in einem vorbestimmten Zielraum bereitgestellt sind;
eine Funktion des Schätzens einer Luftumgebung im Zielraum unter Verwendung eines Superpositionsmodells, das erstellt wird, wobei das Superpositionsmodell dadurch erstellt wird, dass das Elementmodell, das jedem der im Speicherabschnitt gespeicherten Elemente entspricht, auf ein physikalisches Modell des Zielraums basierend auf den erfassten Informationen über die Platzierung jedes der Elemente superponiert wird;
eine Funktion des Erfassens einer Ziel-Luftumgebung des Raums; und
eine Funktion des Regelns der Klimaanlage, um eine Differenz zwischen der Luftumgebung im Zielraum, die durch den Schätzabschnitt geschätzt wird, und der Ziel-Luftumgebung des Raums, die durch den Zielwerterfassungsabschnitt erfasst wird, zu verringern, wobei
das Elementmodell ein Modell zum Vorhersagen der Wirkung des Elements auf die Luftumgebung an jeder Position im Zielraum ist.

## Revendications

1. Dispositif (600) de traitement d'informations comprenant :

une section (610) de stockage adaptée de manière à stocker un modèle d'élément créé pour chacun des éléments affectant un environnement d'air d'un espace, le modèle d'élément prédisant un effet de chacun des éléments sur l'environnement d'air de l'espace dans un cas où chacun des éléments est au niveau d'une position spécifiée, un élément étant une unité intérieure d'un climatiseur, un appareil générant de la chaleur ou un appareil ne générant pas de chaleur ;
une section (620) d'acquisition de placement adaptée de manière à acquérir des informations sur le placement de chacun des éléments prévus dans un espace sujet (100) prédéterminé ;
une section (650) d'estimation adaptée de manière à estimer un environnement d'air dans l'espace sujet en utilisant un modèle de superposition qui est créé, le modèle de superposition étant créé en superposant le modèle d'élément qui correspond à chacun des éléments stockés dans la section de stockage sur un modèle physique de l'espace sujet sur la base des informations sur le placement de chacun des éléments acquises par la section d'acquisition de placement ;
une section (630) d'acquisition cible adaptée de manière à acquérir un environnement d'air cible de l'espace ; et
une section (660) de commande adaptée de manière à commander le climatiseur afin de réduire une différence entre l'environnement d'air dans l'espace sujet estimé par la section d'estimation et l'environnement d'air cible de l'espace acquis par la section d'acquisition cible, dans lequel
le modèle d'élément est un modèle pour prédire l'effet de l'élément sur l'environnement d'air au niveau de chaque position dans l'espace sujet.

**2.** Dispositif (600) de traitement d'informations selon la revendication 1, dans lequel l'environnement d'air de l'espace inclut au moins l'un ou l'une d'une température, d'une humidité, d'un débit d'air et d'une concentration de dioxyde de carbone dans l'espace.

**3.** Dispositif (600) de traitement d'informations selon la revendication 1, dans lequel l'effet de l'élément chauffant sur l'environnement d'air de l'espace est un effet de chaleur générée par l'élément chauffant.

**4.** Dispositif (600) de traitement d'informations selon la revendication 1, dans lequel le modèle d'élément inclut un modèle d'environnement extérieur pour prédire un effet d'un environnement extérieur de l'espace sur l'environnement d'air de l'espace.

**5.** Dispositif (600) de traitement d'informations selon la revendication 4, dans lequel le modèle d'élément inclut en outre un modèle de première substance pour prédire un effet de l'environnement extérieur sur l'environnement d'air de l'espace exercé par l'intermédiaire d'une première substance constituant une surface externe de l'espace.

**6.** Dispositif (600) de traitement d'informations selon la revendication 5, dans lequel le modèle d'élément inclut en outre un modèle de deuxième substance pour prédire un effet d'une deuxième substance sur l'environnement d'air de l'espace, la deuxième substance commandant l'effet exercé par l'environnement extérieur par l'intermédiaire de la première substance.

**7.** Dispositif (600) de traitement d'informations selon la revendication 4, dans lequel le modèle d'élément inclut en outre un modèle de milieu pour prédire un effet de l'environnement extérieur sur l'environnement d'air de l'espace exercé par un milieu s'écoulant directement dans l'espace.

**8.** Dispositif (600) de traitement d'informations selon la revendication 7, dans lequel le modèle d'élément inclut en outre un modèle de deuxième substance pour prédire un effet d'une deuxième substance sur l'environnement d'air de l'espace, la deuxième substance commandant l'effet de l'environnement extérieur exercé par le milieu.

**9.** Dispositif (600) de traitement d'informations selon la revendication 1, dans lequel la section (620) d'acquisition de placement est adaptée de manière à acquérir les informations sur le placement en acceptant la désignation d'une position d'une image d'objet correspondant à chacun des éléments sur un écran.

**10.** Dispositif (600) de traitement d'informations selon la revendication 9, dans lequel la section (620) d'acquisition de placement est adaptée de manière à accepter la désignation d'orientation de chacun des éléments dans l'espace sujet sur l'écran.

**11.** Dispositif (600) de traitement d'informations selon la revendication 1, dans lequel la section (620) d'acquisition de placement est adaptée de manière à acquérir les informations sur le placement incluant des informations sur une position de chacun des éléments dans au moins l'une d'une direction verticale et d'une direction horizontale dans l'espace sujet.

**12.** Dispositif (600) de traitement d'informations selon la revendication 1, dans lequel la section (650) d'estimation est adaptée de manière à estimer l'environnement d'air dans l'espace sujet en utilisant une pluralité des modèles d'élément en tenant compte d'effets mutuels parmi une pluralité des éléments.

**13.** Programme amenant un ordinateur à exécuter :

une fonction de stockage d'un modèle d'élément créé pour chacun des éléments affectant un environnement d'air d'un espace, le modèle d'élément prédisant un effet de chacun des éléments sur l'environnement d'air de l'espace dans un cas où chacun des éléments est au niveau d'une position spécifiée, un élément étant une unité intérieure d'un climatiseur, un appareil générant de la chaleur ou un appareil ne générant pas de chaleur ;
une fonction d'acquisition d'informations sur le placement de chacun des éléments prévus dans un espace sujet prédéterminé ;
une fonction d'estimation d'un environnement d'air dans l'espace sujet en utilisant un modèle de superposition qui est créé, le modèle de superposition étant créé en superposant le modèle d'élément qui correspond à chacun des éléments stockés dans la section de stockage sur un modèle physique de l'espace sujet sur la base des informations acquises sur le placement de chacun des éléments ;
une fonction d'acquisition d'un environnement d'air cible de l'espace ; et
une fonction de commande du climatiseur pour réduire une différence entre l'environnement d'air dans l'espace sujet estimé par la section d'estimation et l'environnement d'air cible de l'espace acquis par la section d'acquisition cible, dans lequel
le modèle d'élément est un modèle pour prédire l'effet de l'élément sur l'environnement d'air au niveau de chaque position dans l'espace sujet.

10
220
200
300
600
230
410a
210a
410b
210b
410c
210c
420
240
430
400
130
500
140
100
110
120

FIG.1

FIG.2

600
601
CPU
602
RAM
603
ROM
604
STORAGE DEVICE

FIG.3

600
610
STORAGE SECTION
620
PLACEMENT ACQUISITION SECTION
630
TARGET ACQUISITION SECTION
640
TEMPERTURE ACQUISITION SECTION
650
ESTIMATION SECTION
660
OUTPUT SECTION

FIG.4

START

ACQUIRE INFORMATION ON PLACEMENT OF INDOOR UNITS, TEMPERATURE SENSORS, FIXTURES, FIRST SUBSTANCES, AND SECOND SUBSTANCES IN SUBJECT SPACE, AND INFORMATION ON GAPS IN FIRST SUBSTANCES — S701

ACQUIRE INFORMATION ON TARGET TEMPERATURE AT EACH POSITION IN SUBJECT SPACE — S702

CREATE SUPERPOSITION MODEL BY SUPERIMPOSING AIR CONDITIONER MODEL, HEAT-GENERATING FIXTURE MODEL, NON-HEAT-GENERATING FIXTURE MODEL, EXTERNAL ENVIRONMENT MODEL, FIRST SUBSTANCE MODEL, MEDIUM MODEL, AND SECOND SUBSTANCE MODEL ON SUBJECT SPACE MODEL — S703

ACQUIRE INFORMATION ON TEMPERATURE MEASURED BY TEMPERATURE SENSOR — S704

ESTIMATE TEMPERATURE AT EACH POSITION IN SUBJECT SPACE BY INPUTTING INFORMATION ON TEMPERATURE INTO SUPERPOSITION MODEL — S705

OUTPUT CONTROL PARAMETER CONTROLLING AIR CONDITIONING DEVICE — S706

END

811(100)
812b(210b)
812a(210a)
810
814(430)
815(160)
813(240)

FIG.5

FIG.6

820
821a(150a)
821b(150b)
821c(150c)
821d(150d)
821e(150e)
821f(150f)
24°C
24°C
26°C
22°C
22°C
26°C

100
210b
410b
25°C
210a
410a
24°C
430
26°C
160
240
420
24°C

FIG.7

150c
26°C
24°C
150b
24°C
150a
150f
26°C
150e
22°C
150d
24°C

FIG.8

INCREASING
AIR VOLUME
210a
STOPPING OPERATION
OF INDOOR UNIT
210b
100
160
240

FIG.9

FIG.10A
914a(172a)
913(171)
912a(170a)
912d(170d)
911(180)
910
914b(172b)
915(173)
COMPU-TATION
912b(170b)
912c(170c)
912e(170e)
912f(170f)
919
FIG.10B
922b(170b)
923a(250a)
922a(170a)
922d(170d)
921(190)
920
923c(250c)
923d(250d)
COMPU-TATION
923b(250b)
922c(170c)
922e(170e)
922f(170f)
929

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2002206785 A
- JP 2001344294 A
- EP 3340163 A1
- JP 2015148410 A


### Non-patent literature cited in the description


- **FAN YUNQING et al.** Energy consumption analysis intended for real office space with energy recovery ventilator by integrating BES and CFD approaches. *BUILDING AND ENVIRONMENT*, vol. 52, ISSN 0360-1323, 57-67